# EUROPEAN PATENT APPLICATION

(11) **EP 2 388 747 A2**
(43) Date of publication of application: **23.11.2011**
(21) Application number: 10731406.4
(22) Date of filing: 15.01.2010
(51) Int. Cl.: G06Q 30/00

(54) **PATTERN GENERATING APPARATUS AND METHOD, AND APPARATUS AND METHOD FOR CUSTOM-MADE GLOVES**

(30) Priority: 16.01.2009 KR 20090003932
(71) Applicant: I-Omni Co., Ltd., Seocho-gu, Seoul 137-070 (KR)
(72) Inventor: PARK, Chang Kyu, Seoul 135-270 (KR); PARK, Yong Soo, Seoul 137-901 (KR); KIM, Sung Min, Gwangju 500-793 (KR); KIM, Ji Young, Yongin-si Gyeonggi-do 446-720 (KR); JEON, Hyung Joong, Seoul 138-160 (KR)
(74) Representative: Michalski Hüttermann & Partner Patentanwälte
(86) International application number: PCT/KR2010/000280
(87) International publication number: WO 2010/082791

(57) **Abstract**

The present invention relates to a method and apparatus for producing custom-made gloves. In the present invention, an order management server receives customer information and hand scan data from a measurement and order processing apparatus, generates pattern information to be used for glove production using a pattern generation apparatus, and requests a leather processing apparatus to produce a glove according to the pattern information. According to the present invention, it is possible to realize an online ordering and production process involving size measurement and manufacturing procedures in the production process for leather gloves. In addition, as body scan data is obtained by a low-cost 2D body scanner instead of a high-cost 3D body scanner, it is possible to produce precise custom-made leather gloves at reduced cost.

## Description

### [Technical Field]

The present invention relates to a method for producing custom-made gloves and, more particularly, to an apparatus and method for generating pattern information for leather gloves on the basis of human body scan data, and to an apparatus and method that produces custom-made gloves by realizing an on-line custom production process for leather gloves and using the pattern information.

### [Background Art]

With rapid advances in digital measurement technology, human body scan data are increasingly applied in various industries. Particularly in the clothing industry, application of body scanning may rapidly produce more accurate measurement results than existing manual measurement procedures and may contribute to automation of the clothing manufacturing process.

However, although a small number of patterns having standard sizes are formed on the basis of precise body scanning data in clothing manufacturing, it is difficult to manufacture clothing products of suitable sizes for all customers. For example, for a leather glove used in sports like golf, when the leather glove fits too loose with respect to the actual size of the hand of the wearer, the leather glove cannot stick to the hand and the wearer cannot grasp a club firmly to maintain a secure hold on the club. On the contrary, when the leather glove is too tight on the hand, the movement of the hand is restricted upon grasping the club and the wearer cannot grip the club in a desired way. Hence, an improperly fitted leather glove may degrade grip quality and wearing sensation.

In particular, since fingers of different persons have different lengths and thumbs may widely move and have different movement ranges, leather gloves manufactured using a small number of patterns having standard sizes may fail to offer acceptable levels of wearing quality to all wearers.

Hence, it is necessary to solve the above problems in the manufacturing process for leather gloves to be used in fields where gripping and wearing quality is important.

In addition, although a newly developed manufacturing process based on 3D body scanning technology may be used to produce more advanced clothing products, as 3D body scanners used in the process are expensive, manufacturing costs will increase. Hence, it may be undesirable to apply a clothing manufacturing process based on 3D body scanning technology to produce simple clothing products like gloves.

### [Disclosure of Invention]

### [Technical Problem]

The present invention has been made in view of the above problems, and an object of the present invention is to provide an apparatus and method that can produce custom-made gloves with improved gripping and wearing quality.

Another object of the present invention is to provide an apparatus and method for producing custom-made leather gloves by realizing an online ordering and production process involving size measurement and manufacturing procedures in the production process for leather gloves.

Still another object of the present invention is to provide an apparatus and method that can produce precise custom-made leather gloves at reduced cost through utilizing scan data obtained by a low-cost 2D body scanner instead of a high-cost 3D body scanner.

### [Technical Solution]

An aspect of the present invention is to provide a pattern generation method, as a method for generating pattern information acting as a reference for production of a glove to be worn by a person to be measured on the basis of body scan information of the person, including: specifying a base pattern that has a preset number of feature points defined to characterize the shape of the glove; and generating the pattern information according to the feature points, the scan information and the elastic modulus of a leather fabric.

Another aspect of the present invention is to provide a custom-made glove producing method, as a method for ordering and manufacturing gloves, including:
(a) receiving order information containing scan information of a person to be measured and customer information; (b) generating pattern information corresponding to the scan information; and (c) requesting production of a glove according to the pattern information and customer information.
   The scan information may include, for the person to be measured, values for at least lengths of all fingers, upper and lower widths of all the fingers, length between the thumb and the index finger, length between the thumb and the wrist, width of the hand and width of the palm.
   The custom-made glove producing method may further include: receiving, before (a) of receiving order information, customer information of the person to be measured; scanning the body of the person to be measured using a 2D scanning apparatus; generating scan information according to the scan result; generating order information corresponding to the scan information and customer information and storing the order information; and sending the order information to an order management server.
   The pattern information may include material information related to the type and elastic modulus of a fabric to be used for production of the glove.
   The custom-made glove producing method may further includes: determining, after (c) of requesting glove production, the type of a fabric according to the material information and preparing the fabric to be processed; applying pre-stress to the prepared fabric; cutting the pre-stressed fabric according to the pattern information; and sewing pieces of the fabric to complete the glove.
(b) of generating pattern information may include: (b1) specifying a base pattern that has a preset number of feature points defined so as to characterize the shape of the glove; and (b2) generating the pattern information according to the feature points, scan information and elastic modulus of a fabric.
(b2) of generating the pattern information may include: (b21) extracting values for the length, upper width and lower width of the index finger and for the length between the thumb and the index finger from the scan information; and (b22) calculating the length of the patterned index finger on the basis of the feature points related to the index finger, the values extracted at (b21) and the elastic modulus.
(b2) of generating the pattern information may include: (b23) extracting values for the lengths, upper widths and lower widths of the middle, ring and little fingers from the scan information; and (b24) calculating the lengths of the patterned middle, ring and little fingers on the basis of the feature points related to the middle, ring and little fingers, the values extracted at (b23) and the elastic modulus.
(b2) of generating the pattern information may include: (b25) extracting values for the length of the thumb, the length between the thumb and index finger, the length of the hand and the length between the thumb and wrist and for the upper widths of all the fingers from the scan information; and (b26) calculating the length of the patterned thumb, the length between the patterned thumb and index finger, the length of the patterned hand and the length between the patterned thumb and wrist, and the upper widths of all the patterned fingers on the basis of the feature points related to the length of the thumb, the length between the thumb and index finger, the length of the hand and the length between the thumb and wrist and to the upper widths of all the fingers, the values extracted at (b25) and the elastic modulus.
(b2) of generating the pattern information may include: (b27) extracting values for the width of the palm and the lower widths of all the fingers from the scan information; and (b28) calculating the width of the patterned palm on the basis of the feature points related to the width of the palm and to the lower widths of all the fingers, the values extracted at (b27) and the elastic modulus.
(b2) of generating the pattern information may include: (b31) extracting values for the lower widths of all the fingers from the scan information; and (b32) calculating the lower widths of all the patterned fingers on the basis of the lower widths of all the fingers, the values extracted at (b31) and the elastic modulus.

Still another aspect of the present invention is to provide a pattern generation apparatus, as an apparatus for generating pattern information acting as a reference for production of a glove to be worn by a person to be measured on the basis of body scan information of the person, including: a feature point handler specifying a base pattern that has a preset number of feature points defined to characterize the shape of the glove; a leather information handler receiving the elastic modulus of a fabric; and a pattern generator generating the pattern information according to the scan information, the elastic modulus and the feature points.

Yet another aspect of the present invention is to provide a custom-made glove producing apparatus, for managing a procedure for ordering and producing custom-made gloves, including an order management server that includes: a communication module sending and receiving glove production information; a pattern generation apparatus generating pattern information according to the glove production information; an order management module managing information regarding local apparel stores and customers according to the glove production information; and a database storing the glove production information.

The custom-made glove producing apparatus may further include a measurement and order processing apparatus connected with the communication module through an information and communication network, and sending order information containing scan information and customer information of a person to be measured.

The scan information may include, for the person to be measured, values for at least lengths of all fingers, upper and lower widths of all the fingers, length between the thumb and the index finger, length between the thumb and the wrist, width of the hand and width of the palm.

The measurement and order processing apparatus may include: an interface module communicating with a scanning apparatus; a scan information handling module controlling the scanning apparatus to generate the scan information related to a human body; a customer information management module generating and managing the customer information; an order placement module generating order information according to the scan information and customer information; a communication module connected with a custom-made glove producing apparatus through an information and communication network and sending the order information thereto; and a database storing the order information.

The pattern information may include material information related to the type and elastic modulus of a fabric to be used for production of the glove.

The custom-made glove producing apparatus may further include a leather processing apparatus connected with the communication module through the information and communication network, receiving the pattern information, and processing the fabric to be used for production of the glove.

The leather processing apparatus may include a leather cutting device cutting the fabric according to the pattern information.

The leather processing apparatus may further include: a leather preprocessing device applying pre-stress to the fabric according to the material information to enable the leather cutting device to process the fabric; and a sewing device sewing pieces of the fabric to complete a glove.

The pattern generation apparatus may include: a feature point handler specifying a base pattern that has a preset number of feature points defined to characterize the shape of the glove; a leather information handler receiving the elastic modulus of a fabric; and a pattern generator generating the pattern information according to the scan information, the elastic modulus and the feature points.

The pattern generator may extract values for the length, upper width and lower width of the index finger and for the length between the thumb and the index finger from the scan information, and calculate the length of the patterned index finger on the basis of the feature points related to the index finger and the elastic modulus.

The pattern generator may extract values for the lengths, upper widths and lower widths of the middle, ring and little fingers from the scan information, and calculate the lengths of the patterned middle, ring and little fingers on the basis of the feature points related to the middle, ring and little fingers, and the elastic modulus.

The pattern generator may extract values for the length of the thumb, the length between the thumb and index finger, the length of the hand and the length between the thumb and wrist and for the upper widths of all the fingers from the scan information, and calculate the length of the patterned thumb, the length between the patterned thumb and index finger, the length of the patterned hand and the length between the patterned thumb and wrist, and the upper widths of all the patterned fingers on the basis of the feature points related to the length of the thumb, the length between the thumb and index finger, the length of the hand and the length between the thumb and wrist and to the upper widths of all the fingers, and the elastic modulus.

The pattern generator may extract values for the lower widths of all the fingers from the scan information, and calculate the lower widths of all the patterned fingers on the basis of the feature points related to the lower widths of all the fingers and to the width of the palm, and the elastic modulus.

The pattern generator may extract values for the width of the palm and the lower widths of all the fingers from the scan information, and calculate the width of the patterned palm on the basis of the feature points related to the width of the palm and to the lower widths of all the fingers, and the elastic modulus.

### [Advantageous Effects]

In a feature of the present invention, it is possible to rapidly manufacture precise gloves through utilizing human body scan data.

It is possible to realize an online ordering and production process involving size measurement and manufacturing procedures in the production process for leather gloves.

In addition, it is possible to reduce manufacturing costs through utilizing scan data obtained via a low-cost 2D body scanner instead of a high-cost 3D body scanner.

### [Brief Description of the Drawings]

The objects, features and advantages of the present invention will be more apparent from the following detailed description in conjunction with the accompanying drawings, in which:
FIG. 1 is a schematic diagram illustrating concepts of the present invention;
FIG. 2 is a block diagram illustrating the technical configuration of an apparatus for producing custom-made gloves according to an embodiment of the present invention;
FIG. 3 is a block diagram illustrating the technical configuration of a measurement and order processing apparatus according to an embodiment of the present invention;
FIG. 4 is a block diagram illustrating the technical configuration of an order management server according to an embodiment of the present invention;
FIG. 5 is a block diagram illustrating the technical configuration of a leather processing apparatus according to an embodiment of the present invention;
FIG. 6 is a flowchart of a method for measuring a glove according to the present invention;
FIG. 7 is a flowchart of a custom-made glove producing method for custom-made gloves according to the present invention;
FIG. 8 is a flowchart of a pattern generation method using a pattern generation apparatus according to the present invention;
FIG. 9 is a flowchart of a glove manufacturing method for the leather processing apparatus;
FIGS. 10 to 14 are examples of the GUI provided by the measurement and order processing apparatus;
FIG. 15 is a screen representation of scan data of a measurement target obtained by the measurement and order processing apparatus;
FIG. 16 is a diagram illustrating scan feature points, lengths and widths of individual portions of the hand for automated measurement;
FIG. 17 is a screen representation of a scan information report obtained from scan data; and
FIG. 18 is a screen representation of pattern information generated by the pattern generation apparatus using the corresponding scan information.

### [Mode for the Invention]

Hereinafter, an apparatus and method for producing custom-made gloves according to exemplary embodiments of the present invention will be described with reference to the accompanying drawings.

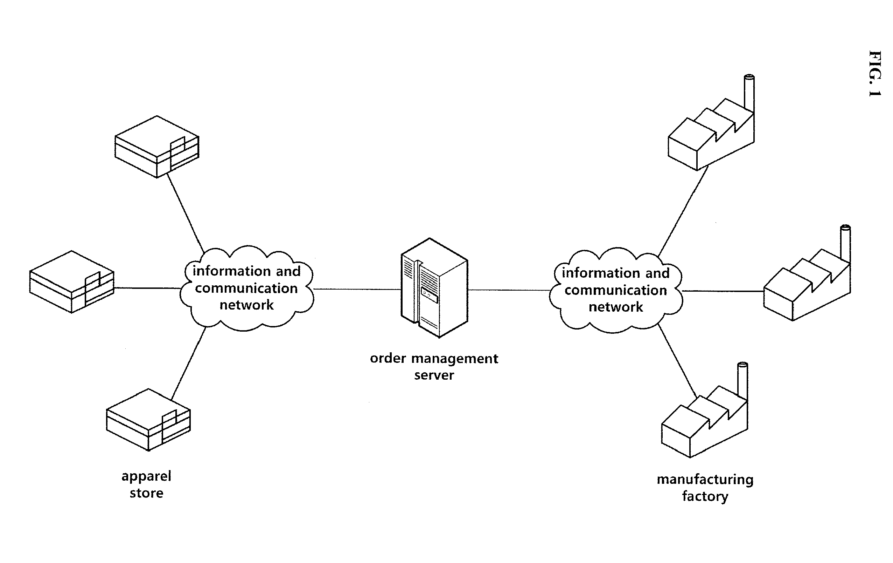

FIG. 1 is a schematic diagram illustrating concepts of the present invention. Referring to FIG. 1, the apparatus for producing custom-made gloves of the present invention includes, as a primary component, an order management server that receives purchase orders for custom-made gloves from apparel stores located at various sites and directs glove manufacturing factories to produce gloves according to the purchase orders. The order management server is connected with the apparel stores and glove manufacturing factories through an information and communication network, and various procedures for producing custom-made gloves are processed online. More specifically, at each apparel store, a measurement and order processing apparatus is installed that sends body scan information of a customer and information on the customer to the order management server. The order management server manages order procedures using the received information. The order management server includes an order management module for managing order procedures and a pattern generation apparatus for generating manufacturing information to be used to manufacture gloves according to body scan information of the customers, and directs the glove manufacturing factories to produce gloves by sending the generated manufacturing information thereto. Each glove manufacturing factory includes a leather processing apparatus that preprocesses, cuts and sews a leather fabric, and actually produces gloves according to the directions of the order management server.

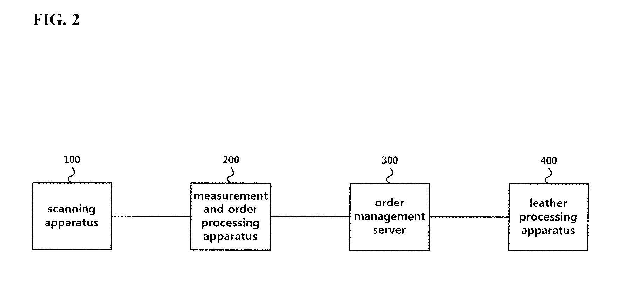

Next, a description is given of a technical configuration of the custom-made glove producing apparatus in connection with FIGS. 2 to 5.

FIG. 2 is a block diagram illustrating a technical configuration of the apparatus for producing custom-made gloves according to an embodiment of the present invention.

Referring to FIG. 2, the custom-made glove producing apparatus of the present invention includes a scanning apparatus 100 for scanning a portion of the body of a customer to be measured, a measurement and order processing apparatus 200 for controlling the scanning apparatus 100 and placing a glove purchase order, an order management server 300 for collecting and managing information regarding glove purchase orders and directing glove production, and a leather processing apparatus 400 for actually producing gloves according to details of purchase orders.

To be more specific, the scanning apparatus 100 is a human body scanner that is connected with the measurement and order processing apparatus 200 through a local or shot-range network and scans the body of a person to be measured under control of the measurement and order processing apparatus 200. Here, the scanning apparatus 100 is preferably a two dimensional (2D) scanner that is less expensive than a three dimensional (3D) scanner.

The measurement and order processing apparatus 200 is computer equipment that obtains acceptable scan data by controlling the scanning apparatus 100 and creates order information to place a glove purchase order with the order management server 300. This function may be carried out by a client program installed in the measurement and order processing apparatus 200, and the client program may be composed of one or more modules. The measurement and order processing apparatus 200 is described in more detail later.

The scanning apparatus 100 and the measurement and order processing apparatus 200 are installed in apparel stores located at various sites, and scan the body of a person to be measured and provide the scan data to the order management server 300 as part of a glove purchase order.

The order management server 300 is a server that is connected with the measurement and order processing apparatus 200 through an information and communication network to handle the overall procedure for glove purchase orders and sends a glove production request to the leather processing apparatus 400 installed in a glove manufacturing factory. For smooth operation, the order management server 300 preferably includes a high-end microprocessor and a large capacity data storage so that it may process multiple requests from more than one measurement and order processing apparatus 200 without delay.

The leather processing apparatus 400 is a production instrument that actually produces gloves according to order information by preprocessing a leather fabric, cutting the preprocessed leather fabric and sewing pieces of the leather fabric together.

The custom-made glove producing apparatus having the above configuration of the present invention produces gloves suitable for the body of a person to be measured and delivers the produced gloves to the person.

Next, individual components of the custom-made glove producing apparatus of the present invention are described in more detail with reference to the drawings.

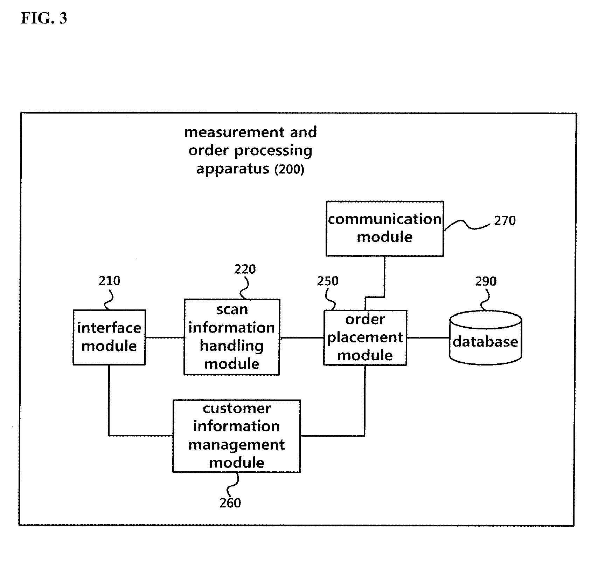

FIG. 3 is a block diagram illustrating the technical configuration of the measurement and order processing apparatus 200 according to an embodiment of the present invention.

Referring to FIG. 3, the measurement and order processing apparatus 200 includes an interface module 210 for receiving order information from a purchase orderer, a scan information handling module 220 for controlling a scanning apparatus to obtain scan data, a customer information management module 260 for managing information regarding customers, an order placement module 250 for handling a procedure for making a glove purchase order, a communication module 270 for communication with the order management server, and a database 290 for storing details of purchase orders.

More specifically, the interface module 210 provides a graphical user interface (GUI) to a person to be measured or a purchase orderer to facilitate scanning and ordering procedures. Here, the person to be measured may be a customer, and the purchase orderer may be an employee working at the apparel store and operating a measurement and order processing apparatus. In some cases, the person to be measured and the purchase orderer may be the same person. The GUI preferably takes the form of windows familiar to most people to enable a person to be measured or a purchase orderer to easily perform the order procedure without much trial and error. The GUI is described in detail later with reference to an illustration.

The scan information handling module 220 controls the scanning apparatus to properly scan the body (i.e. hand) of the person to be measured and generates scan information on the basis of the scan result. Specifically, in the scanning procedure, when the hand of the person to be measured is placed properly in terms of location and shape on the scanning apparatus, the scanning apparatus scans the palm of the hand and produces a corresponding palm image according to manipulation of the person to be measured. The generated palm image is displayed through a display means so that the person to be measured may view the palm image. The scan information handling module 220 generates scan information of the person to be measured by performing automatic measurement of the palm image. Here, the scan information is numerical data capable of characterizing the shape of the hand of the person to be measured, and may be represented by feature points at specific locations on contour lines of the hand and distances between the feature points. This automatic measurement is described in more detail later with reference to relevant drawings.

The customer information management module 260 manages information regarding persons to be measured or customers. Here, customer information may include at least name, contact information, measured size and gender for a customer.

The order placement module 250 performs an order placement procedure for a glove according to manipulation of the purchase orderer. Specifically, the order placement module 250 creates order information containing purchase order details on the basis of scan information generated by the scan information handling module 220 and customer information generated by the customer information management module 260. Here, the order information may include apparel store name, employee name, scan date and time, fabric color and note. The order placement module 250 sends the order information to the order management server through the communication module 270.

The communication module 270 interconnects the measurement and order processing apparatus 200 and the order management server 300 through an information and communication network.

The database 290 stores order information generated by the order placement module 250.

The measurement and order processing apparatus 200 having the above configuration scans the hand of a customer and sends a glove production notification to the order management server, which then manages the overall purchase order procedure for gloves. Next, a technical configuration of the order management server is described in connection with the relevant drawings.

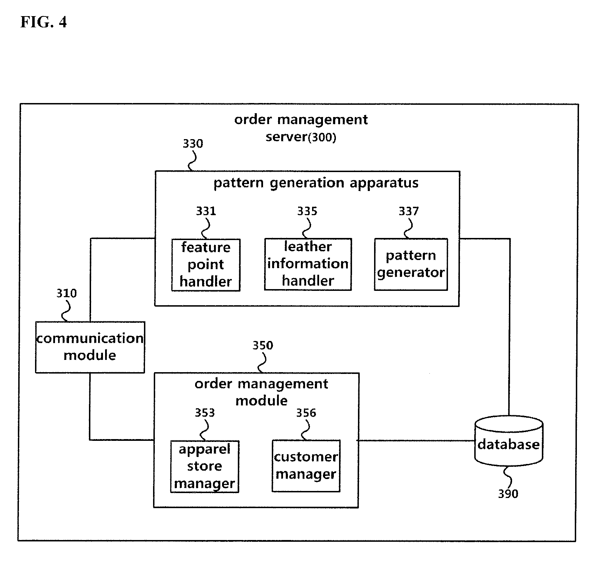

FIG. 4 is a block diagram illustrating the technical configuration of the order management server 300 according to an embodiment of the present invention.

As shown in FIG. 4, the order management server 300 includes a communication module 310 for communication with the measurement and order processing apparatus 200, a pattern generation apparatus 330 for generating a pattern for a glove to be manufactured according to order information, an order management module 350 for managing an order placement procedure, and a database 390 for storing information regarding purchase orders.

To be more specific, the communication module 310 is connected to an information and communication network to send and receive information to and from the measurement and order processing apparatus and the leather processing apparatus. In particular, the communication module 310 receives order information from the measurement and order processing apparatus and sends pattern information to the leather processing apparatus.

The pattern generation apparatus 330 generates pattern information for processing leather according to scan information contained in the order information. The scan information refers to unprocessed scan data, in which unmeasured portions of the hand by 2D scanning, such as hand width, are not considered. In the scan information, glove shape deformation according to hand motion like bending of fingers upon wearing is not yet considered. Hence, the scan information may indicate only the shape of the outline of the hand on a 2D plane and it is not easy to manufacture gloves using only the scan information. To address these issues, the pattern generation apparatus 330 compensates the scan information to generate pattern information. To generate such pattern information, the pattern generation apparatus 330 includes a feature point handler 331, a leather information handler 335 and a pattern generator 337. Generation of pattern information using these elements is described in detail later.

The order management module 350 performs an order management procedure according to details of a glove purchase order contained in the received order information. Here, the order information includes information on the apparel store having placed a purchase order and customer information of the person to be measured. The order management module 350 manages information related to purchase orders such as store employees, store locations and performance records, and information related to customers placing purchase orders such as previous and present purchase information and size information. These information items are stored in the database 390 by an apparel store manager 353 and a customer manager 356 in the order management module 350.

The order management server 300 having the above configuration manages the overall purchase order procedure for gloves and, particularly, generates pattern information for leather processing and provides the pattern information to the leather processing apparatus. Next, a description is given of a technical configuration of the leather processing apparatus in connection with the relevant drawings.

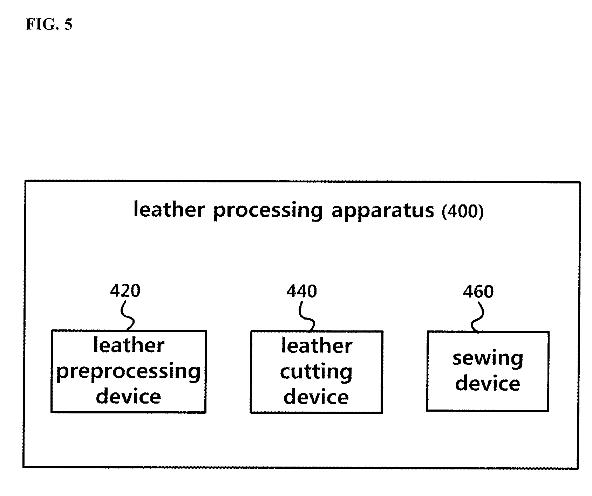

FIG. 5 is a block diagram illustrating the technical configuration of the leather processing apparatus 400 according to an embodiment of the present invention.

As shown in FIG. 5, the leather processing apparatus 400 includes a leather preprocessing device 420 for changing leather properties before use, a leather cutting device 440 for cutting preprocessed leather according to pattern information, and a sewing device 460 for sewing pieces of the leather to produce gloves.

The leather preprocessing device 420 performs a procedure to change initial properties of a leather fabric before cutting. Due to elasticity, a leather fabric stretches by a certain amount when external force is applied thereto, and returns to original form when external force is removed. In consideration of these physical properties, when a glove is made of a leather fabric to which a suitable amount of stress is applied in advance, the glove adheres well to the hand of the wearer because of reduction in size due to elasticity. To use this, the leather preprocessing device 420 functions to apply pre-stress to the leather fabric before cutting. Here, the pre-stress may be applied by pulling the leather fabric in a direction from the center to the outside. The pattern information includes material information such as type and elastic modulus of the leather fabric. The leather preprocessing device 420 prepares a leather fabric to be processed and applies pre-stress to the leather fabric according to material information.

The leather cutting device 440 is a device that cuts a pre-stressed leather fabric according to pattern information. The leather cutting device 440 may be a multiple thermal cutting device or a knife cutting device, and is preferably a laser cutting device.

The sewing device 460 is a device that sews pieces of the leather fabric to produce a final glove. The sewing device 460 sews pieces of the leather fabric according to preset alignment.

The leather processing apparatus 400 having the above configuration produces gloves suitable for a person to be measured through an automated procedure.

Next, a description is given of a method for producing custom-made gloves of the present invention with reference to the drawings.

In the following description, some reference symbols in FIGS. 2 to 5 are used for ease of description.

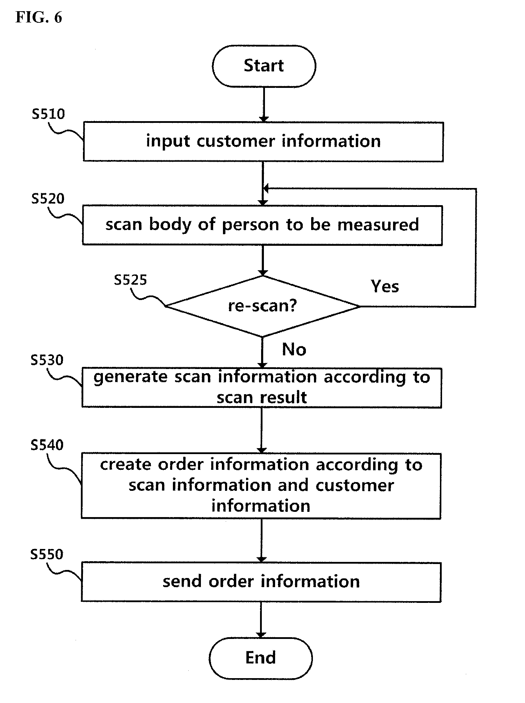

FIG. 6 is a flowchart of a method for measuring a glove according to the present invention. The method of glove measurement is performed by the measurement and order processing apparatus 200 installed in each apparel store. The measurement and order processing apparatus 200 is connected with the scanning apparatus 100 and controls scanning of the body (i.e., hand) of a person to be measured.

Referring to FIG. 6, the customer information management module 260 receives customer information of a customer being a person to be measured (S510). Here, the customer information preferably includes information related to at least customer name, contact, previous size and gender. The customer information is illustrated later with reference to relevant drawings.

The scan information handling module 220 scans the hand of the person to be measured (S520). At step S520, the scan information handling module 220 may capture an image of the alignment status of the hand using a camera and provides the captured image to the person to be measured so that the person to be measured can adjust hand alignment for more accurate scanning. This is illustrated later with reference to the relevant drawing.

The scan information handling module 220 provides a preliminary scan image to the person to be measured before generation of scan information to permit the person to be measured to examine the scan result (S525). When the scan result is unclear or is misaligned, the person to be measured may request the measurement and order processing apparatus 200 to perform rescanning.

The scan information handling module 220 generates scan information according to the scan result (S530). Here, the scan information is numerical data on minimum number of elements capable of characterizing the shape of the hand of the person to be measured. The scan information handling module 220 performs automatic measurement of the generated image. Preferably, for a person to be measured, the scan information includes at least lengths of all fingers, upper and lower widths of all fingers, length between the thumb and the index finger, length between the thumb and the wrist, width of the hand and width of the palm.

To measure portions of the hand, the scan information handling module **220** maps multiple points at regular intervals along contour lines of the hand, and specifies some mapped points at sites appropriate for measuring lengths and widths of various portions of the hand as measurement feature points. Then, the scan information handling module **220** measures the lengths between the measurement feature points to produce scan information composed of numerical values related to lengths and widths of various portions of the hand. Generation of the scan information is illustrated later with reference to the relevant drawings.

The order placement module **250** creates order information using the customer information and the scan information and stores the order information (S540). Here, the order information preferably includes information related to at least shop name, employee name, scan date and time, fabric color and note. The order placement module **250** creates such order information and stores the created order information in the database.

The communication module 270 sends the order information to the order management server 300 through an information and communication network (S550).

Through the above steps, the measurement and order processing apparatus 200 scans the body of a customer and sends the scan data to the order management server 300, which then performs an overall order processing procedure. Next, a description is given of a custom-made glove producing method for custom-made gloves.

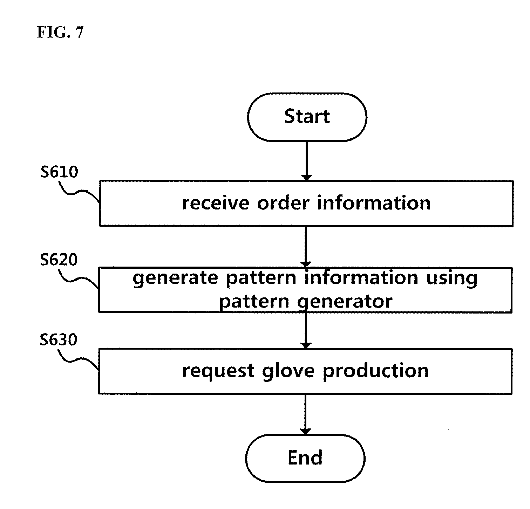

FIG. 7 is a flowchart of a custom-made glove producing method for custom-made gloves according to the present invention. In the custom-made glove producing method, the order management server 300 performs an order placement procedure according to the order information received from the measurement and order processing apparatus 200.

Referring to FIG. 7, the communication module 310 receives order information from the measurement and order processing apparatus 200 through an information and communication network (S610).

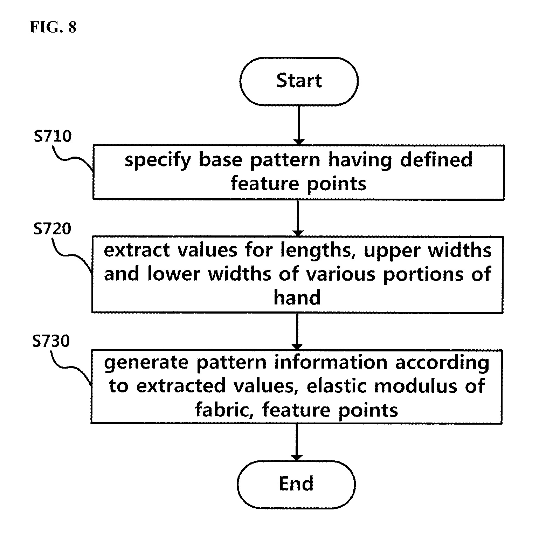

The pattern generation apparatus 330 generates pattern information corresponding to scan information (S620). The scan information is contained in the order information, and the pattern generation apparatus 330 generates pattern information according to the scan information. The pattern information is data for actually cutting a leather fabric, and includes material information of the leather fabric. To perform step S620, the pattern generation apparatus 330 includes a feature point handler 331, a leather information handler 335 and a pattern generator 337. Generation of pattern information is described in more detail later with reference to FIG. 8.

The order management module 350 requests the leather processing apparatus 400 to produce gloves according to the pattern information and customer information (S630). The order management module 350 controls a glove production procedure for each apparel store and customer, and sends a glove production request through the communication module 310 to the leather processing apparatus 400 to produce gloves according to the pattern information generated at step S620 and customer information.

Through the above steps, the order management server 300 generates the pattern information and requests the leather processing apparatus 400 to produce gloves. In particular, the pattern information is very important for preparing and cutting a leather fabric. Next, a description is given of a method for pattern information generation using the pattern generation apparatus with reference to FIG. 8.

FIG. 8 is a flowchart of a pattern generation method using a pattern generation apparatus according to the present invention. The pattern generation method is performed by the pattern generation apparatus 330 of the order management server 300.

Referring to FIG. 8, the feature point handler 331 specifies a base pattern having a suitable number of feature points characterizing the shape of a glove to be manufactured (S710). Here, the base pattern is a type of a glove shape frame acting as a base for cutting, and pattern feature points are arranged so as to reflect unique characteristics of the body shape at specific sites of the base pattern. In other words, pattern feature points are parameters determining glove shapes and subsidiary member types according to the body shape of a person to be measured, and are present on contour lines of the base pattern. A determined number of pattern feature points may be present. In the present invention, pattern information for glove manufacturing is not generated according to all points on contour lines forming the shape of the hand, but is generated according to scan information of various portions of the hand and pattern feature points associated with the various portions. Preferably, the elastic modulus of the leather fabric is considered further in this step. In the present invention, all 19 portions of the hand are used to generate pattern information.

In addition, the scan information as 2D data does not contain data on the width of the hand and does not indicate lengths and widths of subsidiary members for sides surrounding the perimeter of the glove during production. However, as sizes of the subsidiary members tend to depend upon locations of pattern feature points on the base pattern, lengths and widths of the subsidiary members are calculated according to preset pattern feature points on the base pattern. The pattern feature points are normally present between the fingers and at finger joints.

The pattern generator 337 extracts values for lengths, upper widths and lower widths of various portions of the hand (S720). Elements of the pattern information correspond to elements of the scan information for each portion of the hand. Hence, the pattern generator 337 may have to extract a suitable part of the scan information for individual portions of the hand.

The pattern generator 337 generates pattern information corresponding to the pattern feature points, the values determined at step S720 and the elastic modulus of the leather fabric (S730). The elastic modulus of the leather fabric is provided by the leather information handler 335. The pattern generator 337 generates pattern information by correcting coordinates of the pattern feature points on the base pattern with respect to the values extracted from the scan information and the elastic modulus. Here, the pattern information further includes material information related to patterns of the subsidiary members being sides of the glove and to the type and elastic modulus of the leather fabric.

At steps S720 and S730, the pattern generator 337 extracts a part of the scan information for each portion of the hand and generates pattern information for the portion. This is illustrated in Table 1.

**[Table 1]**

| Referenced scan information | | | | Feature point | Elastic modulus of fabric | Pattern information |
|---|---|---|---|---|---|---|
| Length of thumb | | | | Included | Included | Length of patterned thumb |
| Length between thumb and index finger | | | | Included | Included | Length between patterned thumb and index finger |
| Length between thumb and wrist | | | | Included | Included | Length between patterned thumb and wrist |
| Upper widths of all fingers | | | | Included | Included | Upper widths of all patterned fingers |
| Length of hand | | | | Included | Included | Length of patterned hand |
| Lower widths of all fingers | | | | Included | Included | Lower widths of all fingers |
| Width of palm | Lower widths of all fingers | | | Included | Included | Width of patterned palm |
| Length of middle finger | Lower width of middle finger | Upper width of middle finger | | Included | Included | Length of patterned middle finger |
| Length of ring finger | Lower width of ring finger | Upper width of ring finger | | Included | Included | Length of patterned ring finger |
| Length of little finger | Lower width of little finger | Upper width of little finger | | Included | Included | Length of patterned little finger |
| Length of index finger | Lower width of index finger | Upper width of index finger | Length between thumb and index finger | Included | Included | Length of patterned index finger |

For example, referring to Table 1, the length of the patterned thumb may be obtained on the basis of the length of the thumb in the scan information, pattern feature points related to the thumb and the elastic modulus. The length of the patterned index finger may be computed on the basis of the lower width of the index finger, upper width of the index finger, length between the thumb and index finger in the scan information, pattern feature points related to the index finger, and the elastic modulus.

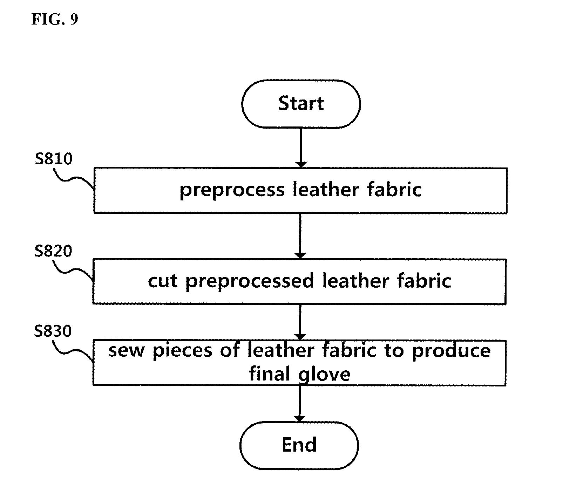

Through the above steps, the pattern generation apparatus 330 generates pattern information for cutting the leather fabric and the order management server 300 sends the pattern information to the leather processing apparatus 400 to produce gloves. Next, a description is given of a glove manufacturing method in connection with FIG. 9.

FIG. 9 is a flowchart of a glove manufacturing method for a processing apparatus. The method of FIG. 9 is performed by the leather processing apparatus 400.

Referring to FIG. 9, the leather preprocessing device 420 prepares a leather fabric to be processed and applies pre-stress to the leather fabric according to material information (S810). As described before, the pre-stress may be applied by pulling the leather fabric in a direction from the center to the outside with a suitable magnitude of a force.

The leather cutting device 440 cuts the pre-stressed leather fabric according to the pattern information (S820).

The sewing device 460 sews pieces of the leather fabric to produce a final glove (S830).

Through the above steps, the leather processing apparatus 400 completes production of a glove according to the purchase order.

Next, examples of the GUI of the present invention are described with reference to the drawings.

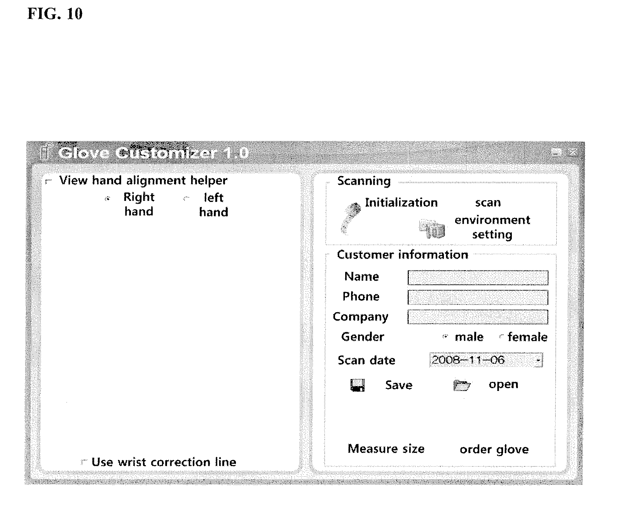

FIGS. 10 to 15 are examples of the GUI provided by the measurement and order processing apparatus.

FIG. 10 illustrates an initial screen that is provided to the person to be measured during scanning. The initial screen is in the form of a window, and enables selection of one of the hands to be scanned and provides input fields for entering customer information.

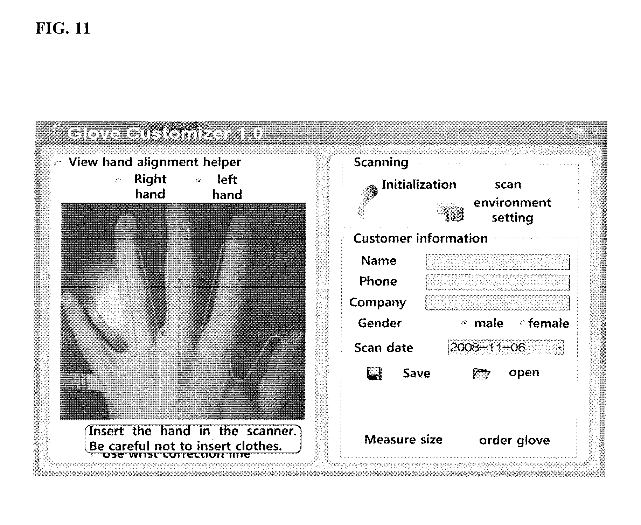

FIG. 11 is a screen representation illustrating alignment of the hand of a person to be measured on the scanning apparatus. When the person to be measured places their hand on the scanning apparatus, alignment lines are provided. To achieve this, the scanning apparatus may further include an image capture means like a camera, and the measurement and order processing apparatus may further provide an alert phrase during alignment.

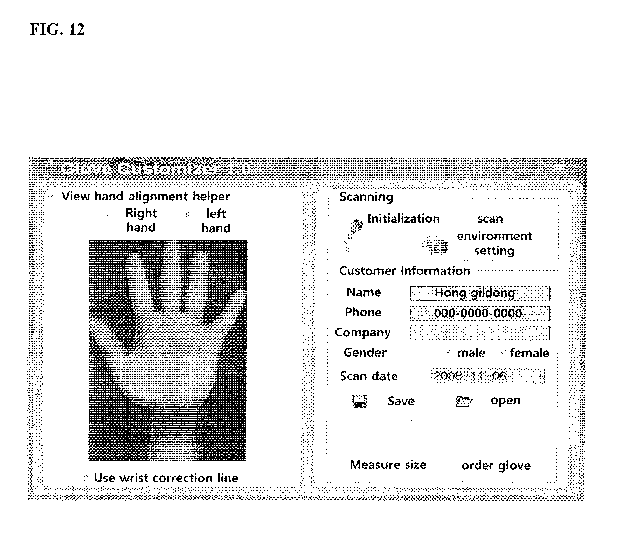

FIG. 12 is a screen representation showing a scan result to permit size measurement and order placement. The measurement and order processing apparatus may provide a screen that prompts the person to be measured to decide whether to rescan, and may perform automatic size measurement and order placement for a glove.

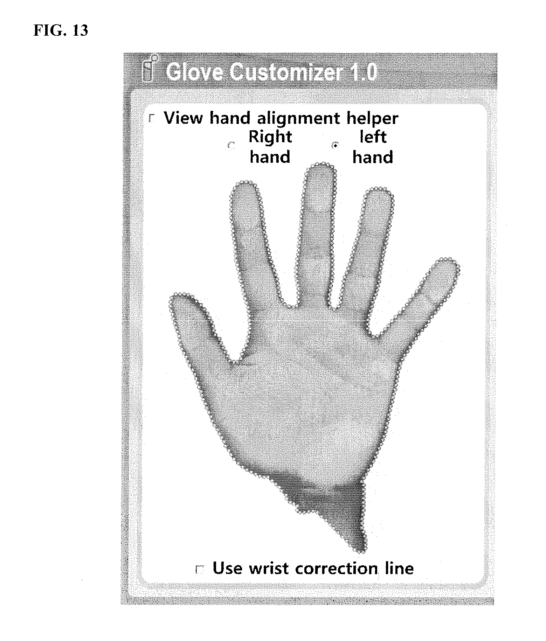

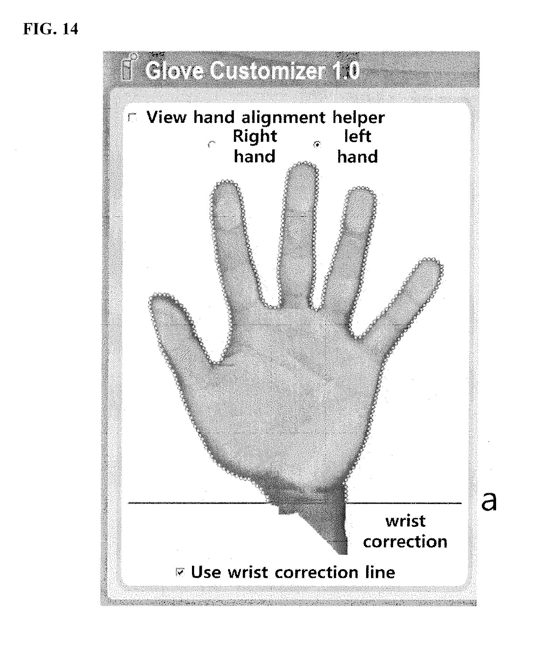

FIGS. 13 and 14 are screen representations illustrating correction of a scan result by removing dummy data around the wrist. As shown, scan data below the wrist is unnecessary for glove production. Hence, a wrist correction line (a) may be used to set a desired range and a portion of the scan result outside this range may be removed for correction.

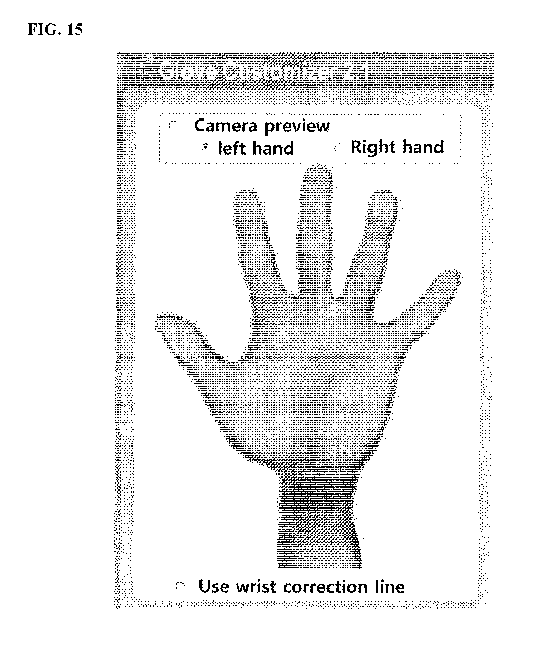

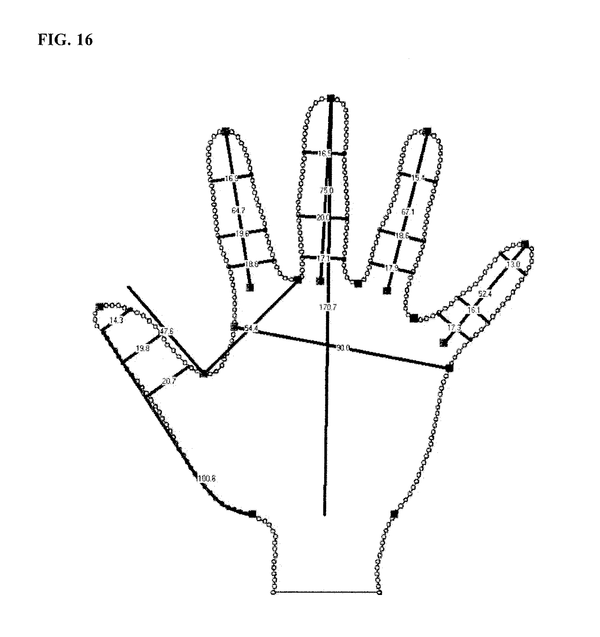

FIG. 15 is a screen representation showing a scan result provided by the measurement and order processing apparatus to the person to be measured. The measurement and order processing apparatus generates scan information by automatically calculating lengths and widths of portions of the hand using the scan result as shown in FIG. 15. The scan result is used to automatically measure the size of the hand as shown in FIG. 16.

FIG. 16 is a diagram illustrating scan feature points, lengths and widths of individual portions of the hand for automated measurement. As shown, many points are regularly mapped on contour lines of the image of the scanned hand and scan feature points are assigned to sites on the contour lines so as to characterize the shape of the hand. These scan feature points may be located at the edge of each finger, between the fingers, and at both ends of each finger joint. The lengths and widths of individual portions of the hand may be obtained by connecting the scan feature points associated in location.

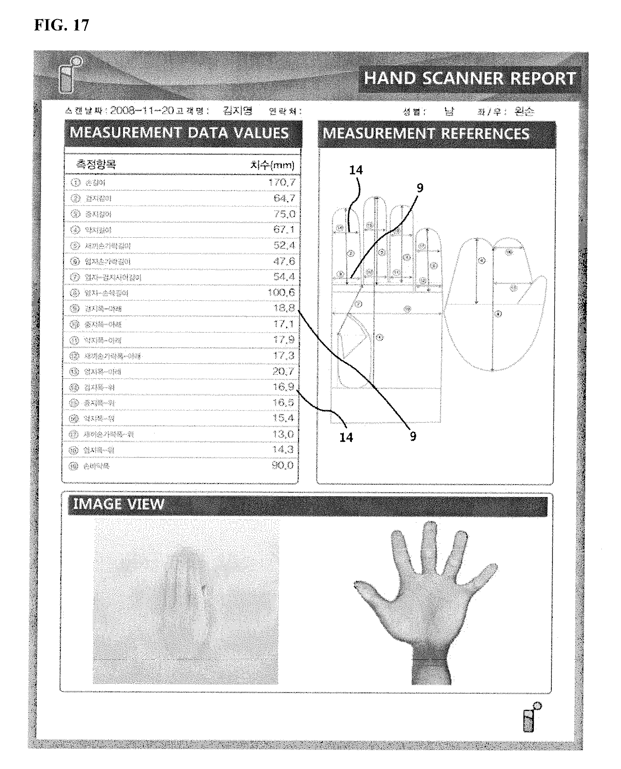

FIG. 17 is a screen representation of a scan information report obtained from scan data, where the lengths and widths of individual portions of the hand are indicated by numerical values. Here, values for the portions of the hand are determined according to preset ranges of pattern feature points. For example, the upper width (14) of the index finger is determined in a range of 15 to 35 percent of the tip of the index finger, and the lower width (9) of the index finger is determined in a range of 5 to 20 percent of the bottom of the index finger.

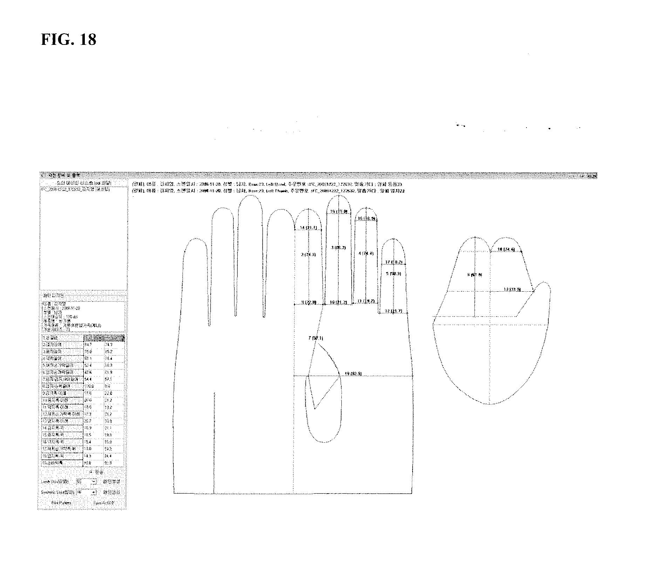

FIG. 18 is a screen representation of pattern information generated by the pattern generation apparatus using corresponding scan information. As shown, the pattern information includes numerical data of a pattern and a glove drawing for cutting the leather fabric. In the pattern information, the glove drawing is obtained by adjusting the lengths and widths of various portions of a specified base pattern according to scan information, feature points and the elastic modulus. The leather processing apparatus cuts the leather fabric according to the glove drawing.

The method for producing custom-made gloves of the present invention may be implemented in programs and be stored in computer readable storage medium such as a CDROM, RAM, ROM, floppy disk, hard disk or magneto-optical disk.

While the present invention has been described with reference to exemplary embodiments thereof, it will be clear to those of ordinary skill in the art to which the invention pertains that various modifications may be made to the described embodiments without departing from the spirit and scope of the invention as defined in the appended claims and their equivalents.

[Industrial Applicability]

## Claims

1. A pattern generation method, as a method for generating pattern information acting as a reference for production of a glove to be worn by a person to be measured on the basis of body scan information of the person, comprising:
specifying a base pattern that has a preset number of feature points defined to characterize the shape of the glove; and
generating the pattern information according to the feature points, the scan information and the elastic modulus of a leather fabric.

2. A custom-made glove producing method, as a method for ordering and manufacturing gloves, comprising:
(a) receiving order information containing scan information of a person to be measured and customer information;
(b) generating pattern information corresponding to the scan information;
and
(c) requesting production of a glove according to the pattern information and customer information.

3. The custom-made glove producing method of claim 2, wherein the scan information comprises, for the person to be measured, values for at least lengths of all fingers, upper and lower widths of all the fingers, length between the thumb and the index finger, length between the thumb and the wrist, width of the hand and width of the palm.

4. The custom-made glove producing method of claim 2, further comprising:
receiving, before (a) of receiving order information, customer information of the person to be measured;
scanning the body of the person to be measured using a 2D scanning apparatus;
generating scan information according to the scan result;
generating order information corresponding to the scan information and customer information and storing the order information; and
sending the order information to an order management server.

5. The custom-made glove producing method of claim 2, wherein the pattern information comprises material information related to the type and elastic modulus of a fabric to be used for production of the glove.

6. The custom-made glove producing method of claim 5, further comprising:
determining, after (c) of requesting glove production, the type of a fabric according to the material information and preparing the fabric to be processed;
applying pre-stress to the prepared fabric;
cutting the pre-stressed fabric according to the pattern information; and
sewing pieces of the fabric to complete the glove.

7. The custom-made glove producing method of claim 2, wherein (b) of generating pattern information comprises:
(b1) specifying a base pattern that has a preset number of feature points defined so as to characterize the shape of the glove; and
(b2) generating the pattern information according to the feature points, scan information and elastic modulus of a fabric.

8. The custom-made glove producing method of claim 7, wherein (b2) of generating the pattern information comprises:
(b21) extracting values for the length, upper width and lower width of the index finger and for the length between the thumb and the index finger from the scan information; and
(b22) calculating the length of the patterned index finger on the basis of the feature points related to the index finger, the values extracted at (b21) and the elastic modulus.

9. The custom-made glove producing method of claim 7, wherein (b2) of generating the pattern information comprises:
(b23) extracting values for the lengths, upper widths and lower widths of the middle, ring and little fingers from the scan information; and
(b24) calculating the lengths of the patterned middle, ring and little fingers on the basis of the feature points related to the middle, ring and little fingers, the values extracted at (b23) and the elastic modulus.

10. The custom-made glove producing method of claim 7, wherein (b2) of generating the pattern information comprises:
(b25) extracting values for the length of the thumb, the length between the thumb and index finger, the length of the hand and the length between the thumb and wrist and for the upper widths of all the fingers from the scan information; and
(b26) calculating the length of the patterned thumb, the length between the patterned thumb and index finger, the length of the patterned hand and the length between the patterned thumb and wrist, and the upper widths of all the patterned fingers on the basis of the feature points related to the length of the thumb, the length between the thumb and index finger, the length of the hand and the length between the thumb and wrist and to the upper widths of all the fingers, the values extracted at (b25) and the elastic modulus.

11. The custom-made glove producing method of claim 7, wherein (b2) of generating the pattern information comprises:
(b27) extracting values for the width of the palm and the lower widths of all the fingers from the scan information; and
(b28) calculating the width of the patterned palm on the basis of the feature points related to the width of the palm and to the lower widths of all the fingers, the values extracted at (b27) and the elastic modulus.

12. The custom-made glove producing method of claim 7, wherein (b2) of generating the pattern information comprises:
(b31) extracting values for the lower widths of all the fingers from the scan information; and
(b32) calculating the lower widths of all the patterned fingers on the basis of the lower widths of all the fingers, the values extracted at (b31) and the elastic modulus.

13. A pattern generation apparatus, as an apparatus for generating pattern information acting as a reference for production of a glove to be worn by a person to be measured on the basis of body scan information of the person, comprising:
a feature point handler specifying a base pattern that has a preset number of feature points defined to characterize the shape of the glove;
a leather information handler receiving the elastic modulus of a fabric; and
a pattern generator generating the pattern information according to the scan information, the elastic modulus and the feature points.

14. A custom-made glove producing apparatus, for managing a procedure for ordering and producing custom-made gloves, comprising an order management server that comprises:
a communication module sending and receiving glove production information;
a pattern generation apparatus generating pattern information according to the glove production information;
an order management module managing information regarding local apparel stores and customers according to the glove production information; and
a database storing the glove production information.

15. The custom-made glove producing apparatus of claim 14, further comprising a measurement and order processing apparatus connected with the communication module through an information and communication network, and sending order information containing scan information and customer information of a person to be measured.

16. The custom-made glove producing apparatus of claim 15, wherein the scan information comprises, for the person to be measured, values for at least lengths of all fingers, upper and lower widths of all the fingers, length between the thumb and the index finger, length between the thumb and the wrist, width of the hand and width of the palm.

17. The custom-made glove producing apparatus of claim 15, wherein the measurement and order processing apparatus comprises:
an interface module communicating with a scanning apparatus;
a scan information handling module controlling the scanning apparatus to generate the scan information related to a human body;
a customer information management module generating and managing the customer information;
an order placement module generating order information according to the scan information and customer information;
a communication module connected with a custom-made glove producing apparatus through an information and communication network and sending the order information thereto; and
a database storing the order information.

18. The custom-made glove producing apparatus of claim 14, wherein the pattern information comprises material information related to the type and elastic modulus of a fabric to be used for production of the glove.

19. The custom-made glove producing apparatus of claim 18, further comprising a leather processing apparatus connected with the communication module through the information and communication network, receiving the pattern information, and processing the fabric to be used for production of the glove.

20. The custom-made glove producing apparatus of claim 19, wherein the leather processing apparatus comprises a leather cutting device cutting the fabric according to the pattern information.

21. The custom-made glove producing apparatus of claim 20, wherein the leather processing apparatus further comprises:
a leather preprocessing device applying pre-stress to the fabric according to the material information to enable the leather cutting device to process the fabric; and
a sewing device sewing pieces of the fabric to complete a glove.

22. The custom-made glove producing apparatus of claim 14, wherein the pattern generation apparatus comprises:
a feature point handler specifying a base pattern that has a preset number of feature points defined to characterize the shape of the glove;
a leather information handler receiving the elastic modulus of a fabric; and
a pattern generator generating the pattern information according to the scan information, the elastic modulus and the feature points.

23. The custom-made glove producing apparatus of claim 22, wherein the pattern generator extracts values for the length, upper width and lower width of the index finger and for the length between the thumb and the index finger from the scan information, and calculates the length of the patterned index finger on the basis of the feature points related to the index finger and the elastic modulus.

24. The custom-made glove producing apparatus of claim 22, wherein the pattern generator extracts values for the lengths, upper widths and lower widths of the middle, ring and little fingers from the scan information, and calculates the lengths of the patterned middle, ring and little fingers on the basis of the feature points related to the middle, ring and little fingers, and the elastic modulus.

25. The custom-made glove producing apparatus of claim 22, wherein the pattern generator extracts values for the length of the thumb, the length between the thumb and index finger, the length of the hand and the length between the thumb and wrist and for the upper widths of all the fingers from the scan information, and calculates the length of the patterned thumb, the length between the patterned thumb and index finger, the length of the patterned hand and the length between the patterned thumb and wrist, and the upper widths of all the patterned fingers on the basis of the feature points related to the length of the thumb, the length between the thumb and index finger, the length of the hand and the length between the thumb and wrist and to the upper widths of all the fingers, and the elastic modulus.

26. The custom-made glove producing apparatus of claim 22, wherein the pattern generator extracts values for the lower widths of all the fingers from the scan information, and calculates the lower widths of all the patterned fingers on the basis of the feature points related to the lower widths of all the fingers and to the width of the palm, and the elastic modulus.

27. The custom-made glove producing apparatus of claim 22, wherein the pattern generator extracts values for the width of the palm and the lower widths of all the fingers from the scan information, and calculates the width of the patterned palm on the basis of the feature points related to the width of the palm and to the lower widths of all the fingers, and the elastic modulus.
